# EUROPEAN PATENT APPLICATION

(11) **EP 2 942 855 A1**
(43) Date of publication of application: **11.11.2015**
(21) Application number: 14167552.0
(22) Date of filing: 08.05.2014
(51) Int. Cl.: H02J 13/00, G06Q 10/04, G06Q 50/06

(54) **Method and system for monitoring distribution systems**

(71) Applicant: Rheinisch-Westfälisch-Technische Hochschule Aachen, 52056 Aachen (DE)
(72) Inventor: Monti, Antonello, 52072 Aachen (DE); Ferdowsi, Mohsen, 52064 Aachen (DE); Benigni, Andrea, 52066 Aachen (DE); Löwen, Artur, 52076 Aachen (DE); McKeever, Padraic, 52159 Roetgen (DE)
(74) Representative: Jostarndt, Hans-Dieter

(57) **Abstract**

This invention describes a novel, low-cost monitoring method and system for power distribution· systems based on distributed artificial intelligence (DAI). Currently, electric utilities face the challenge of monitoring their networks. Applying the monitoring approaches already used in transmission system to distribution networks is economically infeasible considering the much higher number of measurement equipment needed. This has resulted in a so-called blind flight in operation of these networks. In our proposed solution, a hierarchical bottom-up structure is considered to build up the overall picture of the distribution operating status using a low-cost product. This means that estimations are started from individual low voltage (LV) networks and the results are then sent to upper-level medium voltage (MV) grids, contributing to estimations at that level. In this way, the estimation problem in distribution network is broken down into a number of smaller problems. The product combines a very low-cost hardware (such as Raspberry Pi) used to perform the estimations based on a data driven method (including distributed artificial intelligence (DAI) methods such as artificial neural networks (ANNs)) and a communication interface.

## Description

### Field of the invention

The invention is in the field of electric power supply chain and relates to a method and system for the monitoring of distribution systems.

### Background of the invention

A Distribution System Operator (DSO) is a natural or legal person responsible for operating, ensuring the maintenance of, and, if necessary, developing the distribution system in a given area and, where applicable, is responsible for its interconnections with other systems and for ensuring the long-term ability of the system to meet reasonable demands for the distribution of electricity. Moreover, the DSO is responsible for regional grid access and grid stability at low voltage and medium voltage distribution level, integration of distributed generation (DG) units at the distribution level. For high voltage level a transmission system operator (TSO) is responsible. The TSO usually performs the balancing of the energy.

To fulfill these duties properly and efficiently, DSOs should, through employing monitoring systems in their distribution grids, be continually aware of the ongoing situation in said distribution grids. In particular, the data collected and made available by the monitoring systems allow DSOs to identify issues such as outages, excessive voltage deviations, and overloads. With this information, DSOs are able to take corrective actions and plan for required component upgrades and grid extension investments. The need for monitoring systems has further increased in recent years as a result of the ever-increasing penetration of DG units into distribution systems. In particular, solar photovoltaic (PV) systems, which are being extensively integrated into low-voltage (LV) distribution grids, cause significant changes in feeder voltage profiles.

In the paper " Neural networks and pseudo-measurements for real-time monitoring of distribution systems" IEEE Trans. Instr. Meas.,Vol.45, no. 2, pp. 645-650, it is disclosed that state estimation is a major concern for every energy management system. The use of artificial neural networks in the design of a state estimation system is described.

The US 2013/0268196 A1 concerns a system and method of automated acquisition, correlation and display of power distribution grid operational parameters and weather events. Significant changes in monitored and reported operational parameters and/or power outage events occurring in a utility's electrical power transmission/distribution grid are correlated with historical, current and/or forecast weather events based on potential root cause, geographic and temporal constraints. Operational event and outage information is collected and time stamped using a communication network of devices and sources that monitor and report, among other things, on equipment parameters, electric power availability and outages. A computer-implemented root cause analysis engine (RCA), operatively associated with a computer-implemented weather data correlation engine, sorts and analyzes operational parameter/event information and identifies probable correlations to localized weather phenomena. Operational parameters/events are then displayed using a graphic display device in a manner that enables user-controllable and configurable viewing of a time-lapse evolution of weather phenomena overlaid with graphics. The graphics represent both weather-related and other relevant operational parameters/events, which are depicted in relation to the utility's physical infrastructure.

In the 7^{th} framework program of the European commission, the project FP7-248135, "High Performance computing Technologies for Smart Distribution Network Operation" was established wherein 11 partners were involved.
Future electricity distribution networks with mass deployment of network equipment sensors and instrumentation, millions of smart meters, small-scale embedded generation, and responsive load will generate vast amounts of data, requiring near to real-time analysis. So-called cloud and grid computing will enable scalable data mining, feature extraction, and near to real-time state estimation. These and other high performing computing tools and techniques have been recently developed to cost-effectively solve large scale computational challenges in areas such as genomics, biomedicine, particle physics and other major scientific and engineering fields that require similarly scalable communications, computation and data analysis. Based on such recent success, it was the aim of the research project to develop new generation of distribution network management systems that exploit novel near to real-time high performance computing solutions with inherent security and intelligent communications for smart distribution network operation and management. A characteristic of the use of high performance computing solutions is that a huge amount of information/data have to be transferred to the cloud and high performance computing tools are needed, which are cost intensive.

Despite the need for monitoring systems for distribution low voltage (LV) and medium voltage (MV) grids, there is currently no low-cost solution available. Although monitoring is already widely used in high voltage (HV) transmission grids, applying the same monitoring approach and equipment for distribution networks is not feasible, for the main reason that the overall MV and LV electricity grids are much larger than HV grids in terms of number of nodes and length of the lines. For example, the Italian HV grid operated by the Italian Transmission System Operator (TSO), Terna, is approximately 63,500 km long, whereas the total length of MV and LV grids managed by Enel, Italy's largest distribution system operator is around 1,125,000 km. As a result, applying the HV approach to MV/LV grids requires so much measurement and monitoring equipment as to be economically prohibitive. Furthermore, there are still technical issues such as accuracy and performance under dynamic conditions which need to be addressed for monitoring devices.

### Summary of the invention

It is an object of the invention to provide a method and a system for enabling distribution system operators to monitor their systems immediately at a significantly lower cost compared to the existing state estimation solutions.

Furthermore, it is an object of the invention to provide a method and a system for monitoring of the distribution system with a reduced number of measurements in the distribution system.

It is the solution of the invention to provide a system for monitoring a distribution system of an electric power supply chain, wherein the distribution system comprises at least one low voltage (LV) distribution bus for providing power to end consumers. The distribution system further comprises at least one more distribution bus or distribution line at a higher voltage level. The distribution system preferably comprises at least a distribution bus of a medium voltage (MV) level and/or at least a distribution line of a high voltage (HV) level. The said distribution bus or distribution line of the next higher voltage level is connected to the distribution bus of the lower voltage level by at least one transformer. The low voltage distribution bus is connected to one or a plurality of feeders, for example residential feeders, the said feeders being assigned to one low voltage section. Each low voltage section comprises at least one local low voltage estimator.
This solution allows the estimation problem of a complex distribution system to be solved by breaking down the distribution system into different levels and when needed, smaller sections within each level, and obtaining the overall system estimation based on the individual estimations performed on its constituting sections at different levels.

A distribution bus is an electrical node usually made of copper bars or rigid strips of copper where several conductors are terminated. A section is defined as a distribution network comprising one or more feeders below a transformer, for example a MV/LV transformer. A part of a grid is also mentioned as a section. Grid, in general, means a network in power system terminology. A transmission line is a line connected at the high voltage level. The term feeder in this text is used to refer to an electrical branch (cable or overhead line) starting from a transformer (or power supply) which conducts power to a number of loads or other elements connected downstream.

Without limiting the scope of the invention medium voltage level is mentioned as a higher voltage level. It is possible that the system does comprise 3 or 4 or more voltage level in a single distribution system. The information disclosed in respect of LV and MV level could be transferred on a system with more voltage level wherein the relationship between the voltage levels is taken under respect.

In a preferred embodiment of the system for monitoring a distribution system, the distribution bus of the medium voltage is grouped into medium voltage sections and every medium voltage section comprises at least one local medium voltage estimator. At least one local estimator of a low voltage section is connectable to one local estimator of the medium voltage section. This embodiment has the advantage that also on the level of medium voltage the complex structure of the distribution system is broken down into smaller sections, which allows estimation on a per-section basis and in a hierarchical bottom-up structure.

"Bottom-up hierarchical" structure means that the distribution system monitoring problem is broken down into smaller sections in order to simplify the estimation problem. Each LV system or section downstream of a MV/LV transformer constitutes the lower estimation and monitoring level. Then, each LV local estimator sends (periodically, e.g. on a 1 minute basis) its voltage estimates to the upper-level MV local estimator. A local estimator is defined as an estimator which focuses only on a specific section of the system for estimation. At the local estimator of the MV section, the MV local estimator uses at least these estimation and /or measurements generated in the lower level section, preferably along with other measurements available at the MV level, to estimate the voltage profile of the MV section. So, in a bottom-up way, it will be possible to build up the overall picture of the distribution system.

A local estimator is defined as an estimator which focuses only on a specific section of the system for estimation and its estimation is performed independently from the estimations performed for other sections.

In a preferred embodiment of the invention, a connection is established between at least one local estimator of a low voltage section and one local estimator of medium voltage section. This connection can be used to transfer the measurements at the lower level, in particular, the voltage and current measurement at the transformer, to the local estimator at the higher level as input. The estimations performed at the lower level could be made available to the data collector using either the same connections or through direct connections.

In a preferred embodiment, data-driven estimators are used for the local low voltage estimators and/or the medium voltage estimators. The term data-driven indicates that the algorithm used for performing the estimations is based on data-driven techniques as opposed to common model-based approaches. A data driven estimation technique is, for example, artificial neural networks (ANN).

At least one of the local estimators, preferably the low voltage estimator and/or the medium voltage estimator, generates an estimation using artificial neural networks (ANN). So, the monitoring system is based on a data-driven approach using at least an ANN-based local estimator. This local estimator is capable of estimating the voltage profile of an LV or MV system even with very few available measurements. So a distribution monitoring solution is provided which merges the use of a data-driven estimation technique with a hierarchical, bottom-up architecture to estimate the overall operating conditions of the distribution system. One measurement comprises one piece of information. For example, one measurement is an actual voltage information or an actual current information at a predefined point of the section assigned to the local estimator. In a preferred embodiment, two measurements, the voltage and the current measurement, are taken directly behind the transformer. These measurements are transferred to a local estimator arranged close to the transformer. Further measurements are preferably taken at the low voltage side of the transformer of MV/LV. In a preferred embodiment, further measurements comprising only voltage values and may be taken along the feeder or feeders which comprise that section.

By taking measurements at additional points in the LV feeder, the accuracy of the local estimation can be improved. Depending on the number, location, and precision of such measurements and the complexity of the feeder topology, the estimation accuracy may vary.

Having an estimate of the voltage magnitude of all the nodes generated by the low voltage local estimator, which acts as a LV monitoring system, the low voltage local estimator can detect predefined voltage limit violations in its section and send alarms to a data collector. A node is any point of the system to which two or more branches or other elements of the system are connected.

In a preferred embodiment, the local estimator on medium voltage level generates an estimation, especially a voltage estimation, based on measurements at the secondary side of the MV/LV transformer and at least two measurements conducted in the MV section assigned to the medium voltage estimator.

In a preferred embodiment the system comprises a data collector. All estimations and preferably all measurements generated by the system are transferred to the data collector. Moreover, even if the logical flow of information suggests that every local estimator directly communicates the generated estimations to the upper levels, it may be more practical for each local estimator to contact a cloud service to drop off generated estimations and to fetch data from the sub-devices. The central cloud service could be realized as a web service on a regular web server where the data are stored in a database. This approach reduces costs in terms of the amount of data transfer as well as connection time of the individual device. The cloud solution also features a central point of data collection for evaluation and visualization.

The system disclosed above can especially be used to conduct the following method for monitoring distribution systems. The method for monitoring a distribution system of an electric power supply chain, wherein the distribution system comprises low voltage sections and a further voltage section of a higher voltage level, for example medium voltage level or high voltage level, wherein voltage sections comprise at least one local estimator, with the steps of:
generating a low voltage estimation of a low voltage section by a local low voltage estimator, transferring the low voltage estimation to a central data collector and/or a further local estimator of a higher voltage level ( MV, HV), generating a further estimation of the further voltage section based on the at least one estimation generated by the local low voltage estimator and/or measurements at that level and the lower level, transferring the further estimation to the central data collector.

This method has the advantage that a monitoring or a distribution system can be conducted at reduced costs.

In a preferred embodiment, the low voltage estimator generates an estimation based on at least two measurements of that low voltage section. This has the advantage that the cost for providing the measurements and the costs for handling the data are minimized. However, based on the complexity of the network and the type of connected elements to the section, more measurements or other sources of information may be required to ensure high accuracy.

In a preferred embodiment, the local estimator at higher levels generates an estimation based on the measurements at the lower level, namely the voltage and current at the secondary of the transformer MV/LV, and two measurements of the section of the further local estimator. This way of monitoring has the advantage of being hierarchical and bottom-up structured. This structure makes it possible to generate estimations of acceptable accuracy by the need of only few measurements.

As a data-based estimation method, artificial neural network (ANN) is a preferred method to be used to generate an estimation. The local estimator using ANN has to be trained before usage.

These and other objects and advantages of the present invention will be made apparent from the following detailed description, with reference to the accompanying drawings.

### Brief description of the drawings

- Fig.1:: Schematic drawing of a bottom-up hierarchical architecture shows a data-driven artificial intelligence based distribution monitoring system according to the present invention.

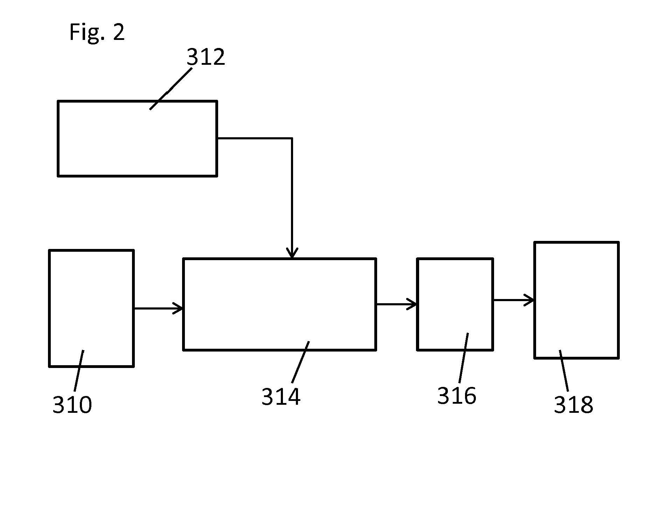

- Fig.2:: Block diagram of a local estimator execution.

### Detailed description of an embodiment

One specific embodiment of the present invention will be described below. In an effort to provide a concise description of these embodiments, not all features of an actual implementation are described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

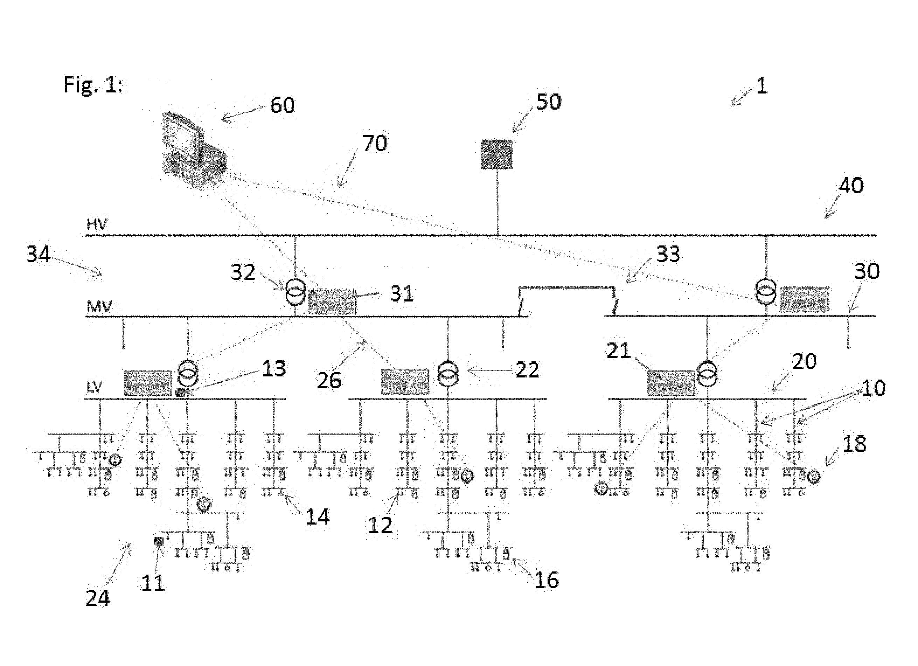

In figure 1, a low-cost system is disclosed that could allow for distribution system monitoring in a distributed, data-driven, bottom-up, hierarchical structure.

"Bottom-up hierarchical" structure means that the distribution system monitoring problem is broken down into smaller sections in order to simplify the estimation problem. Each LV system downstream of a MV/LV transformer constitutes the first estimation and monitoring level. Then, each LV monitoring system sends (periodically, e.g. on a 1 minute basis) its voltage estimates to the upper-level MV monitoring system. At the HV/MV substation, the MV monitoring system uses the measurements at the secondary of the MV/LV transformer, along with measurements available at the MV level, to estimate the voltage profile of the MV grid. So, in a bottom-up way, it will be possible to build up the overall picture of the distribution system.

In figure 1, an example of a distribution system 1 of an electric supply chain is illustrated. The distribution system comprises a main power supply 50, a high voltage (HV) distribution bus 40, a medium voltage (MV) distribution bus 30 and a low voltage (LV) distribution bus 20. The HV distribution bus 40 is connected with the MV distribution bus 30 over HV/MV transformers 32. The MV distribution bus 30 is divided into MV sections. The MV sections 34 are connected by switches 33. In the case that a HV/MV transformer 31 is not working correctly, and a neighboring MV section 34 is able to provide the needed capacities, the neighboring MV sections can be connected by the switch 33. The MV distribution bus 30 can be arranged in a ring form.

In the shown embodiment of Fig. 1, a local estimator 31 is placed close to the HV/MV transformer in every MV section. The MV local estimator is preferably connected with a sensor, not shown, assigned to the distribution bus just behind the HV/MV transformer to get voltage and current information as measurements. A further measurement is taken in every MV section 34. The additional measurement comprises usually only voltage information.

In this embodiment one MV section 34 is connected with a plurality of LV sections 24. Therefore the MV distribution bus 30 of one MV section is connected over a plurality of MV/LV transformers 22 to the LV distribution bus 20 of each LV section 24. Every LV section 24 comprises a LV local estimator 21, which is arranged preferably close to the MV/LV transformer 22, as shown. The LV sections 24 comprises a plurality of feeders 10 which can comprise photovoltaic units 14 or small electricity generators, for example micro-pumps 16, delivering power into the LV section 34. Consumers or houses are shown as small arrows. Measurements are taken in the LV section 24 and delivered to the LV local estimator 21. Preferably one measurement comprising voltage and current information is taken just behind the MV/LV transformer 22 and a further measurement for example by a smart meter comprising least current information is taken a further point 11 of that LV section 24.This measurement data from LV measurement points is communicated to the LV local estimator by power-line communication or mobile cellular communication. In another LV section 34 the measurements 18 are taken at a different place. The measurements points are the points where the measurements are taken.

Dependent on the complexity of the LV section and the elements connected to, the number of required measurement inputs could vary. So, in one section, two measurements could be enough for an acceptable estimation, while another section may need 3 or 4.

Furthermore, it is possible to use other data, such as information about the weather, time of day, and date, as input to the estimator to make it able to differentiate between different operating conditions in a more accurate and reliable way. Weather information can be used to improve the estimations. Information about the weather could, for example, help the estimator differentiate between cases where PV units are generating high power in a sunny day or generating very little in a dark snowy day.

Local voltage profiles generated by MV local estimators 31 are sent to the data collector by data connection 36. The data connection 36 can be, for example, a wireless connection 70. Voltage profiles generated by the LV local estimators are sent to the MV local estimators 31 over a data-connection 26.

In the shown solution, one individual LV local estimator 21 based on an ANN is used in each LV section of the distribution grid to estimate its voltage profile. Voltage profile means the magnitude of all the nodes along the section or feeders of interest. As input, the LV local estimator 21 needs voltage and current measurements at the secondary of MV/LV transformer 13. Further measurements are not essential, but could improve the accuracy of estimations. Depending on the number, location, and precision of such measurements and the complexity of the feeder topology, the estimation accuracy may vary. Having an estimate of the voltage profile of the downstream nodes, the LV local estimators 21, which act as LV monitoring systems, can detect voltage limit violations in their LV section 24 and send alarms to an upstream data collector 60. The voltage profiles generated by the LV local estimator 21 are communicated to the data collector 60, preferably by a wireless connection 70. Furthermore, in the proposed scheme, a bottom-up hierarchical approach is used to estimate the operating condition of the system. This means that the distribution system monitoring problem is broken down to smaller parts in order to simplify the estimation problem. Each LV section 24 downstream of a MV/LV transformer 22 constitutes the first estimation and monitoring level. Then, each LV monitoring system in the form of the LV local estimator 21, sends (periodically, e.g. on a 1 minute basis) its voltage estimates to the upper-level MV monitoring system in the form of an MV local estimator 31. At the MV local estimator 31, the MV monitoring system uses these estimates, along with measurements available at the MV level, to estimate the voltage profile of the MV grid. Therefore, in a bottom-up way, it will be possible to build up the overall picture of the distribution system.

The local estimators are composed of low cost hardware for performing the estimation software and a low cost communication interface. The local estimators 21, 31 could be installed in the form of small boxes in the existing substations without any special requirements.

### ANN-based State Estimation

The ANN-based local estimator 21, 31 for section 24, 34 needs to be trained with appropriate data before being used. For this purpose, archival load flow results that the DSOs already possess, since they are produced for network planning purposes, are used. In case such data are not available, they may be in principle generated, given the model of the network, by running a number of load flows.

Once trained, the resulting ANN is computationally simple and may be implemented and deployed on low-cost hardware. There is also the possibility for re-training the ANN upon availability of new data, which could be also done remotely. However, it is important to stress that these additional measurements are not crucial and it will be possible to monitor the distribution bus 20, 30 status even without them. It should be pointed out that the location and type of available measurements should be known for initial ANN training. If some measurements are suddenly unavailable in runtime, it will be possible to switch to a more basic estimator requiring fewer input measurements. In practice, having the estimation algorithm on a low-cost device and requiring no further investments in measurement devices, makes this solution economic and attractive for utilities.

In 0, the block diagram of the local estimator 21, 31 is shown. The main functionalities which each local estimator has to satisfy are:
- Acquisition of the measurement inputs
- Solution of the ANN-based estimation
- Transmission of estimations and/or measurement information to the upper level and/or to the data collector

Block diagram of the local estimator execution:
The local estimator comprises a measurement input 310, a data driven estimation 314, neural network weighting factors, predefined alarms and an alarm generator 316 and estimated values and alarms 318. Not limiting the scope of the invention ANN can be used as data-driven estimation 314. The neural network weighting factors influence the estimation 314. Predefined alarm limits are stored in the local estimator 21, 31. The estimated values and generated alarm information are transferred to the upper level and the central data collector 70.
Regarding the input measurements 310, it is important to underline that the measurements can be heterogeneous in type, e.g. voltage, current, active and reactive power, binary signals associated with switches status as well as meteorological data like solar irradiation and wind speed. One measurement is taken at one place. In the case that the current and the voltage are measured at one point of the grid, it counts as two measurements. Furthermore, the local estimator 21, 31 should be able to utilize a variety of technologies to acquire the measurements: for example, analog signals can be used for locally connected sensors 13, 11 while remote measurements may come in via power line communication or wireless technologies. Applicable wireless technologies include existing and future cellular technologies (GPRS, UMTS, LTE), IEEE 802.11 (WLAN) and IEEE 802.16 (WiMAX). To create a versatile and cheap device, the local estimator's 21, 31 hardware core can be built independently from the specific communication media as a computational unit that offers basic interfaces, e.g. analog signals and serial communication protocols, to which, on the basis of the selected technology, a separate module can be added to enable a specific communication medium.
Concerning the ANN-based estimation 314, a dedicated solver has to be used. Since the training is performed off-line, the estimation is characterized by an extremely low computational cost. This allows very cheap and relatively slow processors, for example <1 GHz to be used.

For the transmission of the computed values, a modular approach similar to the one applied for the input measurements can be used. In this case, using IEEE 802.11 (WLAN) is not preferred due to range limitations. Power line, cellular and WiMAX technologies does not have such range limitations and therefore are preferably used for transmission of values or information. Also using the telephony fixed-network is an option (DSL). Moreover, even if the logical flow of information suggests that every local estimator 21, 31 directly communicates the computed values to the upper levels MV, it may be more practical for each device to contact a cloud service to drop off measurement data for the data collector 60 and to fetch data from the sub-devices 21, 31. The central cloud service could be realized as a web service on a regular web server where the data are stored in a database. This approach reduces costs in terms of the amount of data transfer as well as connection time of the individual device. The cloud solution also features a central point of data collection for evaluation and visualization.

The LV monitoring system is implemented as low-cost small electronic devices which can easily be developed in existing LV substations. It is possible to remotely operate the LV monitoring system including software download and installation.

Because of the use of the data driven estimation, the method and system can be used for on-line monitoring purposes, as the required calculations are simple and there are not any convergence issues.

The break-down of the distribution monitoring problem into small sub-problems, together with use of a data-driven approach, allows for implementation of the monitoring system on very low-cost monitoring tools.

In summary this invention describes a novel, low-cost monitoring system and method for power distribution· systems based on distributed artificial intelligence (DAI). Currently, electric utilities face the challenge of monitoring their networks. Applying the monitoring approaches already used in transmission system to distribution networks is economically infeasible considering the much higher number of measurement equipment needed. This has resulted in a so-called blind flight in operation of these networks. In our proposed solution, a hierarchical bottom-up structure is considered to build up the overall picture of the distribution operating status using a low-cost product. This means that estimations are started from individual LV networks and the measurements and estimation results are then sent to upper-level MV grids, allowing the estimations at that level be performed independently from the lower voltage estimation. In this way, the estimation problem in distribution network is broken down into a number of smaller problems. The product combines a very low-cost hardware (such as Raspberry Pi) used to perform the estimations based on a DAI method (such as artificial neural networks (ANNs)) and a communication interface. The DAI-based estimator is flexible in terms of the number of measurement inputs.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the spirit and scope of the invention as defined by the following appended claims.

### LIST OF NUMERALS

- 1: distribution system
- 10: feeder
- 11: point of measurement in the end region of feeder
- 12: consumer, housing
- 13: point of measurement at the low voltage side of MV/LV transformer
- 14: photovoltaic
- 16: small electricity generator for example micro-turbine
- 18: measurement
- 20: low voltage distribution bus
- 21: local estimator on LV level
- 22: Transformer MV to LV
- 24: LV section
- 26: connection from LV local estimator to MV local estimator
- 30: Medium voltage distribution bus
- 31: local estimator on MV level
- 32: transformer HV to MV
- 33: switch
- 34: MV section
- 36: connection MV local estimator to central data collector
- 40: high voltage distribution bus
- 50: main power supply
- 60: data collector
- 70: wireless connection
- 310: measurement input
- 312: neural network weighting factors
- 314: ANN-based estimation
- 316: check limits violation and generate alarm
- 318: estimated values and alarms

## Claims

1. System for monitoring a distribution system (1) of an electric power supply chain, wherein distribution system (1) comprises at least one low voltage distribution bus (20) for providing power to end consumers (12) and at least a further distribution bus (30, 40) of a higher voltage level, preferably at least a distribution bus (30) of a medium voltage level and at least a distribution bus (40) of a high voltage level, wherein the distribution bus of the next higher voltage level is connected to the distribution bus of the lower voltage level by at least one transformer (22, 32),
**characterized in that,**
the low voltage distribution bus (20) is connected to one or a plurality of feeders (10), wherein the feeders (10) are assigned to low voltage sections (24) and every low voltage section (24) comprises at least one local low voltage estimator (21).

2. System for monitoring a distribution system of claim 1,
**characterized in that,**
the distribution bus (30) of the medium voltage is grouped into medium voltage sections and every medium voltage section (34) comprises at least one local medium voltage estimator (31).

3. System for monitoring distribution system of claim 2,
**characterized in that,**
a connection, preferably a wireless connection (26), is established between at least one local estimator (21) of a low voltage section (24) and one local estimator (31) of the medium voltage section.

4. System for monitoring a distribution system according to any of the preceding claims,
**characterized in that,**
the local low voltage estimators (21) and/or the medium voltage estimators (31) are data-driven estimators.

5. System for monitoring distributions systems of claim 4,
**characterized in that,**
the low voltage estimator (21) generates the low voltage estimation based on at least one measurement value, but preferably at least two measurement values, taken in the low voltage section (24) assigned to that low voltage estimator (21).

6. System for monitoring distributions systems of claim 5,
**characterized in that,**
the medium voltage estimator (31) generates an estimation based on a low voltage estimation generated by at least one low voltage estimator (21) and/or measurements available to the local low voltage estimator (21) and preferably at least one measurement conducted in the MV section (34) assigned to the local medium voltage estimator (31).

7. System for monitoring distributions systems of claim 5 or 6,
**characterized in that,**
the number of measurements taken in the low voltage section 24 is greater or equal to the number of taken measurements in the medium voltage section.

8. System for monitoring distributions systems according to any of the preceding claims,
**characterized in that,**
at least one of the local estimators (21, 31), preferably the low voltage estimator (21) and/or the medium voltage estimator (31) generates an estimation using artificial neural networks (ANN).

9. System for monitoring distributions systems according to any of the preceding claims,
**characterized in that,**
the system comprises a data collector (60), preferably a cloud, wherein the low voltage estimator (21) and/or medium voltage estimator (31) is connectable to the data collector.

10. System for monitoring distributions systems according to any of the preceding claims,
**characterized in that,**
weather forecast information or weather information are used to improve the estimations of the local estimators (21, 31).

11. Method for monitoring distribution systems (1) of an electric power supply chain, wherein the distribution system (1) comprises low voltage sections (24) and a further voltage section (34) of a higher voltage level, wherein every voltage section (24, 34) comprises at least one local estimator (21, 31), with the steps of:
• generating a low voltage estimation of a low voltage section (24) by a local low voltage estimator (21),
• transferring the estimation to a central data collector (60) and/or a local estimator (31) of a higher voltage level ( MV, HV),
• generating a estimation of the higher voltage section (34) based on the at least one estimation of the low voltage section and/or measurements of that voltage section (34),
• transferring the estimation of the local estimator of higher voltage section to the central data collector (60).

12. Method of claim 11, with the step of:
• providing at least two measurement values taken in one low voltage section (24) to the local estimator (21) of that low voltage section (24),
• transferring the at least two measurement values to the local estimator (21) of that section to enable the local estimator (21) to generate low voltage estimation based on these measurements.

13. Method according to any preceding claim 11 or 12,
wherein the further estimation is generated by the local estimator (31) of a higher voltage section based on at least the estimation and at least two measurements taken in the higher voltage section (34).

14. Method according to any preceding claim 11 to 13,
wherein a data-driven method preferably a method of artificial neural network, is used to generate an estimation.

15. Method according to any preceding claim 11 to 14,
wherein the method comprises training of the local estimators ( 21, 31) before the method of monitoring a distribution system is established.
